# EUROPÄISCHE PATENTSCHRIFT

(11) **EP 2 579 732 B1**
(45) Veröffentlichungstag und Bekanntmachung des Hinweises auf die Patenterteilung: **16.03.2016**
(21) Anmeldenummer: 11725902.8
(22) Anmeldetag: 07.06.2011
(51) Int. Cl.: A23L 2/02, A23L 2/52, A23L 2/58, A23L 5/42, A23L 29/10, A23L 29/00, A23L 29/30

(54) **FARBSTOFF-EMULSION**
DYE EMULSION
ÉMULSION COLORANTE

(30) Priorität: 11.06.2010 DE 102010023421
(43) Veröffentlichungstag der Anmeldung: 17.04.2013
(73) Patentinhaber: Sensient Colors Europe GmbH, 21502 Geesthacht (DE)
(72) Erfinder: KLINGENBERG, Andreas, 21465 Reinbek (DE); ANETZBERGER, Sascha, 21423 Winsen (DE)
(74) Vertreter: RGTH
(86) Internationale Anmeldenummer: PCT/EP2011/059398
(87) Internationale Veröffentlichungsnummer: WO 2011/154407

(56) Entgegenhaltungen:
- EP-A1- 1 972 206
- WO-A1-2010/021820
- DATABASE WPI Week 199522 Thomson Scientific, London, GB; AN 1995-167396 XP000002657926, & JP 7 090188 A (SANEIGEN FFI KK) 4. April 1995 (1995-04-04)
- "Alditole", Wikipedia , Retrieved from the Internet: URL:http://de.wikipedia.org/wiki/Alditole [retrieved on 2014-11-10]
- "Polyole", Wikipedia , Retrieved from the Internet: URL:http//de.wikipedia.org/wiki/Polyole [retrieved on 2014-11-10]

## Beschreibung

Die Erfindung betrifft eine Farbstoff-Emulsion gemäß dem Oberbegriff des Anspruches 1, ein Verfahren zu deren Herstellung und Verwendungen der Farbstoff-Emulsion sowie eine Emulgatorzusammensetzung hierfür.

Eine Emulsion der eingangs genannten Art wird in dem europäischen Patent Nr. 19 722 06 offenbart. Die korrespondierende Anmeldung in den USA ist die US 2008/0260919 A1.

Diese vorbekannte Emulsion weist eine in einer wässrigen Phase dispergierte Ölphase auf, die aus einem fettlöslichen Farbstoff gebildet ist.

Diese besteht zudem aus einer Emulgatorzusammensetzung zur Emulgierung des fettlöslichen Farbstoffes in einem Lebensmittel, die jeweils bezogen auf das Gewicht der Emulgatorzusammensetzung zwischen 10 und 90 Gew.- % oder zwischen 45 und 55 Gew.- % zumindest eines Lecithins, und zwischen 10 und 90 Gew.- % oder zwischen 45 und 55 Gew.- % zumindest eines Saccharoseesters von Fettsäuren umfasst.

Die Fettsäure ist dabei aus der Gruppe ausgewählt, die Palmitinsäure, Stearinsäure, Ölsäure, Laurinsäure und Erucasäure umfasst, wobei das Lecithin aus der Gruppe ausgewählt ist, die aus Phosphatidylcholin, Phosphatidylethanolamin und Phosphatidylinosit besteht.

Diese aus der EP 19 722 06 bekannte Emulsion zeichnet sich insbesondere dadurch aus, dass diese eine höhere Transparenz und eine bessere Leuchtkraft als bekannte Emulsionen von Lebensmittelfarbstoffen aufweist.

Die Wahl eines Emulgators hängt von den Eigenschaften des zu lösenden Mittels und des fettlöslichen Farbstoffes ab. Bei der Verwendung von fettlöslichen Lebensmittelfarben zur Färbung von Fruchtsäften ist beispielsweise zu beachten, dass Fruchtsäuren eine Zerstörung des Emulgators bewirken können. Aus diesem Grunde ist die Verwendung von säurestabilen Emulgatoren wünschenswert.

Neueste Untersuchungen zeigen jedoch, dass der in der EP 19 722 06 verwendete Zuckerester in sehr sauren Getränken, beispielsweise unter pH 3,5 nur eine begrenzte Stabilität aufweist. Zudem hat sich gezeigt, dass die Verwendung des Zuckeresters nicht vollständig zu einer gewünschten annähernd transparenten und stabilen Farbgebung führt.

Aufgabe der Erfindung ist es daher, diese Nachteile nach dem Stand der Technik zu beseitigen. Es soll insbesondere eine Farbstoffemulsion vorgeschlagen werden, die über eine sehr hohe Transparenz sowie eine stabile Farbgebung verfügt. Zudem soll eine Emulgatorzusammensetzung für eine Farbstoffemulsion bereit gestellt werden, die auch eine hohe Säurestabilität in sehr sauren Getränken, beispielsweise unter pH 3,5 aufweist.

Diese Aufgabe wird mit dem Merkmal des Anspruches 1 gelöst. Vorteilhafte Ausgestaltungen der Erfindungen manifestieren sich in den Unteransprüchen.

Die Erfindung betrifft eine Emulsion mit einer wässrigen Phase und eine einen fettlöslichen Farbstoff aufweisende Ölphase sowie mit einer Emulgatorzusammensetzung zur Emulgierung des fettlöslichen Farbstoffes in einem Lebensmittel, wobei ein Emulgator in der wässrigen Phase ein Quillaya-Extrakt ist, und wobei die wässrige Phase mindestens einen Zuckeralkohol enthält. Bevorzugt kann die Emulgatorzusammensetzung zwischen 40 und 80 % Zuckeralkohol umfassen.

Kernidee der Erfindung ist es, ein Quillaya- Extrakt in Kombination mit einem einem Zuckeralkohol zu verwenden, wobei als Emulgator in der Ölphase vorzugsweise Lecithin dienen kann.

Gemäß der Erfindung ist somit eine Emulgatorzusammensetzung zur Emulgierung zumindest eines fettlöslichen Farbstoffes in einem Lebensmittel vorgesehen, die zumindest ein Quillaya-Extrakt umfasst.

Im Rahmen der Untersuchungen zur erfindungsgemäßen Emulsion wurde der mittlerweile in Europa für Getränke zugelassene Emulgator "Quillaya- Extrakt E 999" in einer 20% verdünnten wässrigen Lösung erprobt.

Die wirksamen oberflächenaktiven Komponenten in Quillaya- Extrakten sind dabei Saponine, welche mittels wässriger Auszugsverfahren aus dem Quillaya-Baum gewonnen werden. Man unterscheidet hierbei zwischen Quillaya-Extrakten vom Typ 1 und vom Typ 2. Ein Quillaya-Extrakt vom Typ 1 wird durch wässrige Extraktion aus der zerkleinerten Rinde oder aus Holz vom Quillaya-Baum und anschließende Reinigung erhalten. Der Saponin-Gesamtgehalt im Extrakt vom Typ 1 beträgt etwa 20 bis 25 %. Ein Quillaya-Extrakt vom Typ 2 wird zusätzlichen Aufreinigungsschritten unterzogen, wie beispielsweise einer Ultrafiltration, Membranfiltration oder einer Affinitätschromatographie. Der Saponingehalt im Extrakt vom Typ 2 ist höher als bei Typ 1. Typ 1 ist daher weniger aufgereinigt als Typ 2.

In der vorliegenden Erfindung wird bevorzugt ein Quillaya-Extrakt vom Typ 2 verwendet. Der Saponin-Gesamtgehalt des verwendeten Quillaya-Extrakts, bezogen auf die Trockensubstanz, liegt dabei bevorzugt im Bereich von 65 bis 90 %.

Die erfindungsgemäß aufgefundene Zusammensetzung des Emulgators zeichnet sich insbesondere durch eine hohe Säurestabilität in sehr sauren Getränken mit einem pH-Wert im Bereich von ≤ 3,5, insbesondere im pH-Bereich von 2,5 bis 3,5, aus. Darüber hinaus stellt die erfindungsgemäße Emulgatorzusammensetzung ein effizientes System zur Emulgierung von fettlöslichen Lebensmittelfarbstoffen insofern dar, als insbesondere in Getränken, vorzugsweise in Softdrinks eine leuchtend gelbe, annähernd transparente und stabile Farbgebung erreicht wird.

Insbesondere führt die erfindungsgemäße Emulsion zu einer besonders feinen Tröpfchengröße in der Ölphase mit gelösten Naturfarbstoffen, die vorzugsweise eine Tröpfchengröße von 50 bis 600 nm, noch bevorzugter < 200 nm, aufweisen.

Es hat sich gezeigt, dass Lecithin die Bildung der Emulsion begünstigt.

Unter dem Begriff "Lecithin" wird hier eine Substanz gemäß EG-Nummer E 322 (siehe Amt für amtliche Veröffentlichungen der Europäischen Gemeinschaften, CONSLEG: 1996L0077 - 20/11/2003) verstanden. Danach ist Lecithin als Mischung oder Fraktion aus Phosphatiden, die mittels physikalischer Verfahren aus tierischen oder pflanzlichen Nahrungsmitteln gewonnen werden, definiert. Lecithine umfassen auch die hydrolisierten Stoffe, die mit ungefährlichen und geeigneten Enzymen gewonnen werden. Das Enderzeugnis darf keinerlei enzymatische Restaktivität aufweisen. Als Synonyme für Lecithine werden die Begriffe "Phosphatide" und "Phospholipide" verwendet.

Vorzugsweise ist das Lecithin aus der Gruppe ausgewählt, die Phosphatidylcholin, Phosphatidylethanolamin und Phosphatidylinosit umfasst. Stärker bevorzugt ist das Lecithin Phosphatidylcholin. Nach einer weiteren Ausführungsform umfasst die Emulgatorzusammensetzung Lecitine gemäß E 473.

Der fettlösliche Farbstoff ist vorzugsweise ein Lebensmittelfarbstoff, insbesondere ein Farbstoff, der aus der Gruppe ausgewählt ist, die Carotinoide, Chlorophylle oder Kombinationen dieser umfasst. In einer besonders bevorzugten Ausführungsform ist der fettlösliche Farbstoff ein Carotinoid. Das Carotinoid kann aus der Gruppe gewählt sein, die Bixin, Capsanthin, Capsorubin, Lutein, Rhodoxanthin und Kombinationen dieser umfasst.

Die erfindungsgemäße Emulsion besitzt, wie bereits erläutert, aufgrund der geringen Teilchengröße eine hohe Transparenz. In einer bevorzugten Ausführungsform ist die Emulsion transparent. Ferner kann vorgesehen sein, dass die Emulsion bei Einsatz z. B. in Getränken einen Trübungskoeffizienten (FNU-Wert) von unter 40 erreicht und in der spektralphotometrischen Analyse bei 700 nm ein Absorptionskoeffizient von unter 0,1 erzielt wird. Der FNU-Wert ("Formazine Nephelometric Unit") ist ein Parameter für die Trübungsmessung.

Bei dem Lebensmittelfarbstoff handelt es sich vorzugsweise um ein Carotinoid. Ein besonders bevorzugter Lebensmittelfarbstoff ist ß-Carotin. Die Erfindung ist nicht auf Lebensmittelfarbstoffe beschränkt, sondern kann auch fettlösliche Farbstoffe, die keine Lebensmittelfarbstoffe sind, als Ölphase umfassen.

Die erfindungsgemäße Emulsion wird vorzugsweise einem Getränk, in einer Dosierung von 0,05 bis 2 g/kg Getränk zugesetzt. Dabei wird eine transparente Farbgebung erzielt.

Es hat sich erfindungsgemäß als besonders vorteilhaft herausgestellt, wenn das Endprodukt, insbesondere ein Getränk, soviel Quillaya-Extrakt vom Typ 2 zugesetzt wird, dass ein Gesamtgehalt an Saponinen im Bereich von 5 ppm bis 15 ppm vorliegt. Bereits eine derart geringe Menge an Saponinen führt dazu, dass eine stabile Emulsion erhalten wird, d.h. der resultierenden Emulgatorzusammensetzung wird eine überraschend hohe Säurestabilität verliehen. Dies ist für den Fachmann völlig unerwartet, da beispielsweise Quillaya-Extrakte vom Typ 1 üblicherweise als Schaumbildner mit Konzentrationen von 100 ppm bis 250 ppm in Softdrinks zum Einsatz kommen. Dies bedeutet bei einem angenommenen Saponin-Anteil von 20% (Quillaya-Extrakt vom Typ 1), dass ein Gesamtgehalt von etwa 20 ppm bis 50 ppm an Quillaya-Saponinen eingesetzt werden muss, um eine Schaumbildung hervorzurufen. Erfindungsgemäß sind demgegenüber deutlich geringere Konzentrationen in einem Getränk bereits ausreichend, um eine stabile Emulsion zu erhalten.

Erfindungsgemäß bevorzugt ist das Quillaya-Extrakt vom Typ 2 in einer Konzentration von 5 ppm bis 50 ppm, bevorzugter 7,5 ppm bis 30 ppm, ganz besonders bevorzugt > 10 ppm bis 25 ppm in einem Nahrungsmittel, bevorzugt einem Getränk, ganz besonders bevorzugt einem sauren Getränk, vorhanden.

Ein weiterer Vorteil des Emulgators gemäß der vorliegenden Erfindung ist, dass keine "Ringbildung" bei Lagerung der mit der Emulsion gefärbten Getränke in PET-Kunststofflaschen auftritt. Man bezeichnet dieses Verhalten auch als "bottle staining" und "neck ringing effect". Im Gegensatz zum erfindungsgemäß bereitgestellten Emulgator treten diese nachteiligen Effekte bei Emulsionen sehr häufig auf, so dass diese Produkte vom Verbraucher dann abgelehnt werden. Auch eine Emulgator-Kombination aus Zuckerestern und Lecithin entsprechend der eingangs erläuterten EP 19 722 06 weist diesen Nachteil der "Ringbildung" auf.

Die Emulgatorzusammensetzung umfasst vorzugsweise (a) zwischen 0,5 und 3 % des zumindest einen Lecithins und (b) zwischen 15 und 30% des zumindest einen Quillaya- Extraktes, wobei sich die prozentualen Angaben auf die Gesamtrezeptur der Farbstoffzubereitung beziehen.

Vorzugsweise ist der Quillaya-Extrakt also ein 20 % in Wasser gelöster Extrakt.

Emulsionen mit einer dispergierten Ölphase, deren durchschnittliche Öltröpfchengröße kleiner oder gleich 200 nm ist, können mittels an sich bekannter Hochdruck-Homogenisatoren hergestellt werden. Dabei wird eine Rohemulsion oder -suspension beispielsweise mittels einer Drei-Kolben-Pumpe bei einem Druck von bis zu 900 bar durch ein Düsensystem gefördert. Extreme Scher- und Dehnungskräfte sorgen für eine effiziente Zerkleinerung und eine enge Tröpfchengrößenverteilung. Eine hochturbulente Mischkammer sorgt für eine Stabilisierung der Tropfen und minimiert störende Koaleszenzeffekte. Die erfindungsgemäße Emulsion wird vorzugsweise bei einem Druck von 200 bis 900 bar hergestellt.

Die Erfindung wird nachfolgend anhand von Beispielen näher erläutert:

### Herstellung der erfindungsgemäßen Emulsion

Zur Herstellung der erfindungsgemäßen Emulsion wird folgende Rezeptur bereitgestellt und wie im Folgenden beschrieben verarbeitet, die prozentualen Angaben beziehen sich auf die Gesamtrezeptur.

| | | **Bezeichnung** | **in %** |
|---|---|---|---|
| **Wasser- Phase** | | Glycerol | 40,00 - 80,00 % |
| | | | |
| | | Sorbitol (Zuckeralkohol) | |
| | | Quillaya- Extrakt 20 % in Wasser gelöst | 15,00 - 30,00 % |
| | | | |
| **Öl- Phase** | | Pflanzliches Öl | 2,00 - 20,00 % |
| | | Tocopherol (Antioxidanz) | 1 - 3 % |
| | | Lecithin (Co-Emulgator) | 0,5 - 5 % |
| | | Carotin 30% (Farbstoff, Wirkstoff) | 1 - 10 % |

Vorzugsweise ist der Quillaya-Extrakt also ein 20 % in Wasser gelöster Extrakt.

### 1. Herstellung Wasserphase

Glycerin und Quillaya- Extrakt werden vermischt und unter ständigem Rühren mittels Labor-Propellerrührer bei ca. **350rpm** (rotation per minutes; Umdrehungen pro Minute; U/min) auf **40°C** erwärmt.

### 2. Herstellung Ölphase

Tocopherol, pflanzliches Öl, Lecithin und Carotin werden vermischt und unter ständigem Rühren auf **140°C** erhitzt und für **5 min** gehalten. Durch Kontrolle des Mikrobildes (1000x) ist abzusichern, dass sämtliche ß-Carotin-Kristalle gelöst sind.

### 3. Herstellung der Emulsion durch Zugabe von Öl in Wasser

Der Wasserphase wird im Rahmen eines Vermischungsschrittes unter Dispergieren mittels Ultra-Turrax bei 500rpm (rotation pro minutes) die Ölphase langsam aber stetig zugeführt. Anschließend erfolgt eine Voremulgierung bei 10.000rpm (rotation per minutes) für **5 min.** Die Partikelgrößenverteilung und das Mikrobild der Voremulsion werden kontrolliert. Hier sollen 90% der Partikel eine Größe von < 1,5 µm aufweisen (Zielvorgabe: 90.00% < 1,5µm).

Direkt im Anschluss erfolgt eine Behandlung mit dem HochdruckHomogenisator bei **50/350** bar in **2** Durchgängen. Danach werden erneut die Partikelgrößenverteilung (Zielvorgabe: 90.00% < 1,0µm) und das Mikrobild (blank) sowie der Trübungswert (c=0,02% → < 40 FNU) der Emulsion kontrolliert. Unter dem Begriff "Mikrobild" ist im vorliegenden Zusammenhang das Bild in der Mikroskop-Vergrößerung, d. h. beim Blick auf den Mikroskopobjektträger, auf den die (Vor-)emulsion aufgetragen wurde, beispielsweise in 100facher und/oder 1000facher Vergrößerung, zu verstehen.

### 4. Bewertung, der Stabilität

Es hat sich gezeigt, dass die erfindungsgemäße Emulsion im Lagertest bei 5° C und 40° C 9 Monate bzw. 5 Wochen stabil war. Zudem belegen die Partikelgrössenmessungen und die spektralphotometrischen Analysen, dass die erfindungsgemäße Emulsion keine Phasentrennung zeigt und ohne Hinweis auf einen Farbabbau stabil bleibt.

## Patentansprüche

1. Emulsion mit einer wässrigen Phase enthaltend mindestens einen Zuckeralkohol und eine einen fettlöslichen Farbstoff aufweisende Ölphase sowie mit einer Emulgatorzusammensetzung zur Emulgierung des fettlöslichen Farbstoffes in einem Lebensmittel, **dadurch gekennzeichnet, dass** ein Emulgator in der wässrigen Phase ein Quillaya-Extrakt ist.

2. Emulsion nach Anspruch 1, **dadurch gekennzeichnet, dass** das Quillaya-Extrakt vom Typ 2 ist oder dass der Zuckeralkohol ein Sorbitol und/oder Glycerol ist.

3. Emulsion nach einem der Ansprüche 1 und 2, **dadurch gekennzeichnet, dass** ein Emulgator in der Ölphase Lecithin ist.

4. Emulsion nach einem der vorhergehenden Ansprüche , **dadurch gekennzeichnet, dass** die Emulsion bei einem Druck von 200 bis 900 bar bevorzugterweise mittels eines Hochdruck-Homogenisators hergestellt worden ist.

5. Emulsion nach einem der vorhergehenden Ansprüche, **dadurch gekennzeichnet, dass** die Emulsion bei Licht einer Wellenlänge, die im für das menschliche Auge sichtbaren Bereich liegt, transparent ist, oder dass die Emulsion bei 700 nm einen Absorptionskoeffizienten kleiner 0,1 aufweist, oder dass die Emulsion einen Trübungskoeffizienten (FNU-Wert) von 40 oder weniger aufweist.

6. Emulsion nach einem der vorangehenden Ansprüche, **dadurch gekennzeichnet, dass** der Farbstoff ein Lebensmittelfarbstoff, bevorzugterweise ein Carotinoid oder ein β-Carotin ist und insbesondere das Carotinoid aus der Gruppe ausgewählt ist, die Bixin, Capsanthin, Capsorubin, Lutein, Rhodoxanthin und Kombinationen dieser umfasst oder ein α- und β-Carotin, Lycopin oder Apocarotinal und/oder weitere fettlösliche Lebensmittelfarbstoffe wie Chlorophylle enthält.

7. Emulsion nach einem der vorangehenden Ansprüche, **dadurch gekennzeichnet, dass** die wässerige Phase aus in Wasser gelöstem Quillaya-Extrakt, und einem Zuckeralkohol besteht, oder dass der Quillaya- Extrakt ein 20% in Wasser gelöster Extrakt ist, oder dass die durchschnittliche Größe der Öltröpfchen in der Emulsion 50 bis 600 nm, bevorzugt < 200 nm, beträgt.

8. Emulsion nach Anspruch 3, **dadurch gekennzeichnet, dass** ein Lecithin der Emulgatorzusammensetzung Phosphatidylcholin ist.

9. Emulsion nach einem der vorangehenden Ansprüche, **dadurch gekennzeichnet, dass** die Emulgatorzusammensetzung
a) zwischen 0,5 und 5% Lecithin; und
b) zwischen 15 und 30 % Quillaya-Extrakt
umfasst.

10. Emulsion nach einem der vorangehenden Ansprüche, **dadurch gekennzeichnet, dass** die Emulgatorzusammensetzung zwischen 40 % und 80 % Zuckeralkohol umfasst.

11. Emulsion nach Anspruch 1, **dadurch gekennzeichnet, dass** die Emulsion folgende Gesamtrezeptur aufweist:
a) Ölphase:
- Lecithin 0,5 % bis 5 %
- Carotin 1,0 % bis 10 %
- pflanzliches Öl 2,0 % bis 20 %
- Tocopherol 1,0 % bis 3 %,
b) Wasserphase:
- Zuckeralkohol wie
- Glycerol und/oder Sorbitol 40 % bis 80 %
- Quillaya-Extrakt 15 % bis 30 %
wobei bevorzugt das Quillaya-Extrakt in Wasser gelöst ist.

12. Verfahren zur Herstellung einer Emulsion nach einem der Ansprüche **1** bis **10**, **dadurch gekennzeichnet, dass** die Emulsion mittels eines Hochdruck-Homogenisators bei einem Druck von 200 bis 900 bar hergestellt wird.

13. Verwendung einer Emulsion nach einem der Ansprüche 1 bis 10 in einem Nahrungsmittel oder in einem Getränk, bevorzugt in einem sauren Getränk, insbesondere mit einem pH-Wert ≤ 3,5, das bevorzugterweise 0,05 bis 2 g/kg der Emulsion pro kg Getränk enthält.

14. Verwendung nach Anspruch 13, **dadurch gekennzeichnet, dass** im Getränk ein Gesamtgehalt an Saponinen, enthalten im zugesetzten Quillaya-Extrakt, im Bereich von > 5 ppm, bevorzugt > 10 ppm, besonders bevorzugt 5 ppm bis 15 ppm, vorliegt, oder dass das Getränk einen Absorptionskoeffizienten bei 700 nm von 0,1 oder weniger aufweist, oder dass die Emulsion einen Trübungskoeffizienten (FNU-Wert) von 40 oder weniger aufweist.

15. Verwendung einer Emulgatorzusammensetzung in einer Emulsion nach einem der Ansprüche 1 bis 10 zur Emulgierung eines Carotinoids in einem Fruchtgetränk oder einer Fruchtzusammensetzung.

16. Getränk, insbesondere Frucht-Getränk, welches vorzugsweise ein saures Getränk mit einem pH-Wert von ≤ 3,5, insbesondere 2,5 bis 3,5, ist, **dadurch gekennzeichnet, dass** das Getränk eine Emulsion gemäß einem der Ansprüche 1 bis 11 umfasst.

## Claims

1. Emulsion with an aqueous phase, comprising at least one sugar alcohol and an oil phase having a fat-soluble dye as well as with an emulsifier composition for emulsifying the fat-soluble dye in a foodstuff, **characterized in that** an emulsifier in the aqueous phase is a Quillaya extract.

2. Emulsion according to claim 1, **characterized in that** the Quillaya extract is of type 2 or that the sugar alcohol is a sorbitol and/or a glycerol.

3. Emulsion according to one of claims 1 and 2, **characterized in that** an emulsifier in the oil phase is lecithin.

4. Emulsion according to one of the preceding claims, **characterized in that** the emulsion has been produced at a pressure of 200 to 900 bar preferably by means of a high-pressure homogenizer.

5. Emulsion according to one of the preceding claims, **characterized in that** the emulsion in the light of a wavelength which is in the visible range for the human eye, is transparent, or that the emulsion at 700 nm has an absorption coefficient of less than 0.1, or that the emulsion has a turbidity coefficient (FNU value) of 40 or less.

6. Emulsion according to one of the preceding claims, **characterized in that** the dye is a food coloring, preferably a carotenoid or a ß-carotene and that in particular the carotenoid is selected from the group comprising bixin, capsanthin, capsorubin, lutein, rhodoxanthin and combinations of these, or an α- und β-carotene, lycopene or apocarotenal and / or other fat-soluble food dyes such as chlorophylls.

7. Emulsion according to one of the preceding claims, **characterized in that** the aqueous phase consists of Quillaya extract dissolved in water and a sugar alcohol, or that the Quillaya extract is a 20% extract dissolved in water or that the average size of the oil drops in the emulsion is 50 to 600 nm, preferably < 200 nm.

8. Emulsion according claim 3, **characterized in that** a lecithin of the emulsifier composition is phosphatidylcholine.

9. Emulsion according to one of the preceding claims, **characterized in that** the emulsifyer composition comprises
a) between 0.5 and 5% lecithin; and
b) between 15 and 30% Quillaya extract.

10. Emulsion according to one of the preceding claims, **characterized in that** emulsifier composition comprises between 40 % and 80% sugar alcohol

11. Emulsion according to claim 1, **characterized in that** the emulsion has the following total formulation:
| a) | oil phase: | |
|---|---|---|
| | - Lecithin | 0.5% to 5% |
| | - Carotene | 1.0% to 10% |
| | - Vegetable oil | 2.0% to 20% |
| | - Tocopherol | 1.0% to 3%, |
| | | |
| b) | aqueous phase: | |
|---|---|---|
| | - sugar alcohol such as | |
| | - Glycerol and/or Sorbitol | 40% to 80% |
| | - Quillaya extract | 15% to 30% |
wherein preferably the Quillaya extract is dissolved in water.

12. A process for preparing an emulsion according to one of claims 1 to 10, **characterized in that** the emulsion is prepared by means of a high-pressure homogenizer at a pressure of 200 to 900 bar.

13. Use of an emulsion according to one of claims 1 to 10 in a foodstuff or in a beverage, preferably in an acidic beverage, in particular having a pH-value ≤3.5, which preferably contains 0.05 to 2 g / kg of the emulsion per kg of beverage.

14. Use according to claim 13, **characterized in that** the beverage has a total content of saponins, contained in the added Quillaya extract, in the range of> 5 ppm, preferably> 10 ppm, particularly preferably from 5 ppm to 15 ppm, or that the beverage has an absorption coefficient at 700 nm of 0.1 or less, or that the emulsion has a turbidity coefficient (FNU value) of 40 or less.

15. Use of an emulsifier composition in an emulsion according to one of claims 1 to 10 for emulsifying a carotenoid in a fruit drink or a fruit composition.

16. Beverage, particularly fruit drink preferably being an acidic beverage with a pH value of ≤3.5, in particular 2.5 to 3.5, **characterized in that** the beverage comprises an emulsion according to one of claims 1 to 11.

## Revendications

1. Emulsion comportant une phase aqueuse contenant au moins un alcool de sucre, et une phase huileuse présentant un colorant liposoluble, ainsi qu'une composition émulsifiante pour émulsifier le colorant liposoluble dans un produit alimentaire, **caractérisée en ce qu'**un émulsifiant, dans la phase aqueuse, est un extrait de quillaia.

2. Emulsion selon la revendication 1, **caractérisée en ce que** l'extrait de quillaia est de type 2, ou que l'alcool de sucre est un sorbitol et/ou un glycérol.

3. Emulsion selon l'une des revendications 1 et 2, **caractérisée en ce qu'**un émulsifiant, dans la phase huileuse, est une lécithine.

4. Emulsion selon l'une des revendications précédentes, **caractérisée en ce que** l'émulsion a été fabriquée sous une pression de 200 à 900 bar, de préférence à l'aide d'un homogénéisateur haute pression.

5. Emulsion selon l'une des revendications précédentes, **caractérisée en ce que** l'émulsion est transparente à une lumière ayant une longueur d'onde qui se trouve dans la plage visible pour l'oeil humain, ou que l'émulsion présente à 700 nm un coefficient d'absorption inférieur à 0,1, ou que l'émulsion présente un coefficient de turbidité (valeur FNU) de 40 ou moins.

6. Emulsion selon l'une des revendications précédentes, **caractérisée en ce que** le colorant est un colorant alimentaire, de préférence un caroténoïde ou un b-carotène, et en particulier que le caroténoïde est choisi dans le groupe comprenant la bixine, la capsanthine, la capsorubine, la lutéine, la rhodoxanthine et les combinaisons de celles-ci, ou contient un a- et un b-carotène, une lycopine ou un apocaroténal, et/ou d'autres colorants alimentaires liposolubles tels que les chlorophylles.

7. Emulsion selon l'une des revendications précédentes, **caractérisée en ce que** la phase aqueuse est constituée d'un extrait de quillaia dissous dans l'eau et d'un alcool de sucre, ou que l'extrait de quillaia est un extrait dissous dans l'eau à 20 %, ou que la grosseur moyenne des gouttelettes d'huile dans l'émulsion est de 50 à 600 nm, de préférence < 200 nm.

8. Emulsion selon la revendication 3, **caractérisée en ce qu'**une lécithine de la composition émulsifiante est la phosphatidylcholine.

9. Emulsion selon l'une des revendications précédentes, **caractérisée en ce que** la composition émulsifiante comprend :
a) de 0,5 à 5 % de lécithine ; et
b) de 15 à 30 % d'extrait de quillaia.

10. Emulsion selon l'une des revendications précédentes, **caractérisée en ce que** la composition émulsifiante comprend de 40 à 80 % d'un alcool de sucre.

11. Emulsion selon la revendication 1, **caractérisée en ce que** l'émulsion a la formulation suivante :
a) phase huileuse :
- lécithine 0,5 à 5 %
- carotène 1,0 à 10 %
- huile végétale 2,0 à 20 %
- tocophérol 1,0 à 3 %,
b) phase aqueuse :
- alcool de sucre, ainsi que
- glycérol et/ou sorbitol 40 à 80 %
- extrait de quillaia 15 à 30 %
l'extrait de quillaia étant de préférence dissous dans l'eau.

12. Procédé de fabrication d'une émulsion selon l'une des revendications 1 à 10, **caractérisé en ce que** l'émulsion est fabriquée à l'aide d'un homogénéisateur haute pression sous une pression de 200 à 900 bar.

13. Utilisation d'une émulsion selon l'une des revendications 1 à 10 dans un produit alimentaire ou dans une boisson, de préférence dans une boisson acide, ayant en particulier un pH ≤ 3,5, qui de préférence contient 0,05 à 2 g/kg de l'émulsion par kg de boisson.

14. Utilisation selon la revendication 13, **caractérisée en ce que** la boisson présente une teneur totale en saponines contenues dans l'extrait de quillaia ajouté comprise dans la plage > 5 ppm, de préférence > 10 ppm, d'une manière particulièrement préférée de 5 à 15 ppm, ou que la boisson présente un coefficient d'absorption à 700 nm de 0,1 ou moins, ou que l'émulsion présente un coefficient de turbidité (valeur FNU) de 40 ou moins.

15. Utilisation d'une composition émulsifiante dans une émulsion selon l'une des revendications 1 à 10 pour émulsifier un caroténoïde dans une boisson fruitée ou une composition fruitée.

16. Boisson, en particulier boisson fruitée, qui de préférence est une boisson acide ayant un pH ≤ 3,5, en particulier de 2,5 à 3,5, **caractérisée en ce que** la boisson comprend une émulsion selon l'une des revendications 1 à 11.
